Europäisches Patentamt

(19) European Patent Office

Office européen des brevets

(11) Publication number: **0 070 627**
**B1**

(12) **EUROPEAN PATENT SPECIFICATION**

(45) Date of publication of patent specification: **06.11.85**

(21) Application number: **82303260.2**

(22) Date of filing: **22.06.82**

(51) Int. Cl.⁴: **H 01 R 13/02, H 01 B 7/28,
C 08 L 35/00**

(54) Electrical wire and contact coating composition.

(30) Priority: **14.07.81 US 283292
18.05.82 US 379340
14.07.81 US 283286**

(43) Date of publication of application:
**26.01.83 Bulletin 83/04**

(45) Publication of the grant of the patent:
**06.11.85 Bulletin 85/45**

(84) Designated Contracting States:
**BE CH DE FR GB IT LI NL SE**

(56) References cited:
**IEEE TRANSACTIONS ON PARTS, HYBRIDS,
AND PACKAGING, vol. PHP-12, no. 1, March
1976, pages 51-56, New York (USA);
W.H.ABBOTT et al.: "The lubrication and
environmental protection of alternatives to
gold for electronic connectors"
IEEE TRANSACTIONS ON PARTS, HYBRIDS,
AND PACKAGING, vol. PHP-13, no. 1, March
1977, pages 72-78, New York (USA); W.O.
FREITAG: "Lubricants for separable
connectors"**

(73) Proprietor: **MINNESOTA MINING AND
MANUFACTURING COMPANY
3M Center, P.O. Box 33427
St. Paul, MN 55133 (US)**

(72) Inventor: **Pokorny, Richard J.
2501 Hudson Road P.O. Box 33427
St. Paul Minnesota 55133 (US)**
Inventor: **Roiko, Russel A.
2501 Hudson Road P.O. Box 33427
St. Paul Minnesota 55133 (US)**

(74) Representative: **Baillie, Iain Cameron et al
c/o Ladas & Parry Isartorplatz 5
D-8000 München 2 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

# 0 070 627

**Description**

This invention relates to a coating composition for electrical wires and connectors. The composition renders water-repellant and protects electrical wire, especially communication wire; the composition is also an electrical contact enhancing composition for coating onto low pressure sliding or slidable connections, and more specifically onto pin-and-socket type connectors. In another aspect, it relates to a process for waterproofing and protecting electrical wire. In a further aspect, it relates to articles coated with the electrical contact enhancing composition of the present invention.

Paper and polyethylene insulated electrical wire may suffer from degradation of its protective covering. This degradation can result in failure of the electrical properties of the wire or cause it to short out. A further problem exits with spiral wrapped paper insulation. Splicing and other handling of the wire tends to result in exposure of the copper core. Particularly, such handling can cause unravelling of the spiral wrapped paper insulation. To overcome this problem without expensive rewiring, field applied spray insulation, for example, an aliphatic polyurethane system has been developed. This system has utility for polyethylene insulated wires, but has not been found to be useful on paper.

Electrical connectors subject to plug and unplug motion often suffer from wear, such as fretting, and increased contact resistance due to atmospherically induced corrosion of the contact caused by humidity, pollutants, and oxidation. In the prior art, microcrystalline waxes are known as contact enhancing compositions. In addition, antioxidant lubricating fluids, e.g., a wide variety of natural and synthetic materials such as polyphenyl esters, natural and synthetic hydrocarbons, esters, polyglycols, fluorinated materials, and silicones have been used on electrical connectors to decrease this wear and the corrosion to which they are subject. Since most fluid lubricants are insulators, their use can actually serve to minimize or entirely prevent the desired metallic contact, and contact resistance between sliding surfaces may be very high.

Gold plating of contacts or contact points is practiced in the art due to the outstanding electrical properties of gold and its known inertness to corrosion. However, the high cost of this metal has made it desirable to eliminate gold plated contacts.

There remains a need in the art for electrical wire-protecting and contact enhancing compositions which can provide a high degree of environmental protection to pulp, polyethylene, and paper insulated wires and to contacts made of metals such as copper alloys coated with metals such as tin, tin/lead, and silver, and which compositions can provide good electrical performance.

It is novel in the art to provide a sprayable field-applied insulation which is a solvent-containing mixture comprising an anhydride copolymer, a flexibilizing polymer, and a fluorochemical compound, the mixture being inexpensive, easily applied, having good electrical characteristics, drying rapidly, resisting moisture, thermally stable at pedestal temperatures, non-flammable, having good clarity so color coding is not affected, and actually having a contact enhancing effect on connectors and having no effect on other hardware normally used in wire splicing and terminating, and useful for pulp, polyethylene, and paper insulated wires.

Briefly, the present invention provides an electrical wire and electrical contact enhancing composition useful to maintain the integrity of new paper insulated wire and restorative for wire on which paper or polyethylene insulation has degraded or unraveled and useful for coating on low pressure sliding connections, the composition comprising an admixture of an anhydride copolymer, a flexibilizing copolymer, a hydrophobic, soluble, compatible fluoroaliphatic radical-containing composition, optionally an antioxidant, optionally a mercaptan, and a suitable solvent system, and articles made therefrom.

The invention provides a composition having adhesive properties towards paper, polyethylene, polycarbonate, and metal, particularly copper, dissolved in a nonflammable mixture of organic solvents. It is compatible with polycarbonate connectors known to stress-crack due to polycarbonate solubility in many solvents. Since insulation restorative compositions are frequently used in enclosed areas such as indoors and in manholes, and on live wires, the liquid composition is non-flammable. It penetrates and is absorbed into the wire insulation surface, and upon drying, bonds paper to itself, and tightly seals cracks in polyethylene. It re-establishes a thin layer of insulation where the paper insulation has degraded or the polyethylene has cracked. The dried composition acts as an insulative overcoat on exposed copper wires of connections. The dried coating composition has good clarity, so wire color coding will not be affected.

As an electrical contact enhancing composition, the invention provides a soft, deformable coating composition to form a skin on a connecting block (electrical receptor) made of an insulating material, which can be any thermoplastic, such as polycarbonate, polypropylene, polyethylene, polyurethane, polyphenyl oxide, or nylon; any thermoset plastic such as phenolic, urea, or melamine formaldehydes; or ceramic, such as porcelain; and contacts in it made of metals such as copper alloys, tin, silver, gold, steels or stainless steels. The connecting block with its contacts or receptors, and a set of pins made of metals such as copper alloys or stainless steels forms a mating pair of electrical contacts. When plugged in, each pin displaces the deformable coating composition in at least one area of the receptor so as to provide direct metal to metal contact between the pin and receptor, thereby providing good electrical conductivity, while the composition seals the contact area from the environment. Upon pin removal, due to the spring load type of contact used in the art, wiping action between pin and receptacle and composition results, and the composition is thereby reapplied to the exposed metal surfaces. Upon re-insertion of the pin in the

2

receptacle, the same or a new metal surface on both pin and receptor is exposed. Generally, the area of exposed metal becomes larger as the plug-unplug process continues. Continuous wiping action results in the retardation of pin oxidation and weatherability of the terminal block is thereby provided. The coating has sufficient resiliency and adherence so that it seals firmly to the metals and plastics or ceramics used in the receptacle block and pins.

Desirable properties of a contact enhancing composition includes the following: lubricity to reduce friction and wear, non-volatility to prolong times between re-lubrication, fretting protection by shutting out the atmosphere during motion of parts, low creep to avoid contamination elsewhere and to avoid the need for re-lubrication, oxidative stability so as not to form insulating resins *in situ*, and compatibility so as not to interact with metallic or nonmetallic materials around the contact.

According to one aspect the present invention is a coating composition for electrical wires and connectors comprising an admixture in weight percent of the dried composition of
a. 8 to 75 percent of an anhydride copolymer which is the reaction product of:

1) alkyl-, phenyl- or phenylalkyl-substituted or unsubstituted cyclic anhydride in which said alkyl group contains 1 to 6 carbon atoms and said cyclic group contains 4 to 15 carbon atoms, and
2) a $C_{10}$ to $C_{24}$ aliphatic unsaturated hydrocarbon;

b. 8 to 75 percent of a flexibilizing polymer selected from polyisobutylene, styrene olefin styrene block polymer, and polymers of ethylene copolymerized with vinyl acetate, acrylate esters, methacrylate esters and alpha-olefins;
c. 5 to 75 percent of a hydrophobic, compatible, fluoroaliphatic radical-containing composition which contains a monovalent, fluorinated, aliphatic organic radical having an average of at least 5 to 14 carbon atoms which optionally can be interrupted by divalent O-atoms or trivalent N-atoms bonded to C-atoms;
d. 0 to 10 percent of a mercaptan compound, which compound is selected from a silane mercaptan having 4 to 17 carbon atoms and an alkyl- or alkoxy-mercaptan of 4 to 24 atoms; and
e. 0 to 20 percent of an antioxidant compound.

Another aspect of the present invention is a coating solution for electrical wires and connectors characterized by 4 to 30 weight percent of the total solution of the composition of the invention as disclosed above and 96 to 70 weight percent of the total solution of a solvent system containing a mixture of at least one $C_6$ to $C_9$ aliphatic hydrocarbon, at least one alcohol with one to four carbon atoms, and trichlorotrifluoroethane.

A further aspect of the present invention is an electrical wire or connector comprising a substrate having coated on at least one surface thereof a composition of the invention as disclosed above.

As a wire coating composition, most preferably the present invention comprises an admixture of (weights refer to the dried composition):
35 to 70 weight percent of an anhydride copolymer
10 to 41 weight percent of a flexibilizing polymer,
10 to 40 weight percent of a fluoroaliphatic radical-containing composition,
0 to 10 weight percent of a mercaptan compound, and
0 to 5 percent by weight and most preferably 2 percent by weight of an antioxidant composition.

The wire coating composition is dissolved at a level of 4 to 12 percent by weight of the total solution, preferably 6 to 9 percent by weight, dissolved in a solvent system comprising 88 to 96 percent by weight of the total solution, the solvent system being a mixture of $C_6$ to $C_9$ aliphatic hydrocarbons, lower molecular weight alcohols (i.e., $C_1$ to $C_4$), and trichlorotrifluoroethane. To provide a non-flammable solvent mixture the level of trichlorotrifluoroethane should be from 75 to 95 percent by weight of the solvents and preferably 80 to 90 percent. The aliphatic hydrocarbons comprise 10 to 25 percent by weight of the solvent mixture and the alcohols comprise 0.5 to 15 percent by weight of the solvent mixture.

As an electrical contact enhancing composition, more preferably the present invention comprises an admixture of (weights refer to the dried composition):
10 to 67 weight percent of an anhydride copolymer,
10 to 57 weight percent of a flexibilizing polymer,
7 to 68 weight percent of a fluoroaliphatic radical-containing composition,
0 to 7 weight percent, most preferably 0.05 to 1.0 weight percent, of a mercaptan compound, and
1.0 to 20 percent by weight, most preferably 1.5 to 18 percent by weight, of an antioxidant composition.

The electrical contact enhancing composition is dissolved at a level of 4 to 30 percent by weight of the total solution, preferably 10 to 20 percent by weight of the total solution, in a nonflammable solvent system comprising a mixture of $C_6$ to $C_9$ aliphatic hydrocarbons, lower molecular weight $C_1$ to $C_4$ alcohols, and trichlorotrifluoroethane. Aliphatic hydrocarbons, such as heptane or hexane, comprise 5 to 35 percent by weight of the solvent system, and lower molecular weight alcohols such as isopropyl alcohol comprise 0.5 to 25 percent, and trichlorotrifluoroethane (Freon TF®, E. I. DuPont de Nemours Corp.) comprises 30 to 90 percent, preferably 50 to 80 percent, by weight of the solvent system.

The anhydride copolymer component is an anhydride which is an alkyl-, phenyl- or phenylalkyl-substituted or unsubstituted cyclic anhydride in which each alkyl group can contain 1 to 6 carbon atoms, and the cyclic group can contain 4 to 15 carbon atoms, such as maleic or itaconic anhydride copolymerized

3

with a $C_{10}$ to $C_{24}$ aliphatic hydrocarbon, and preferably the copolymer is maleic anhydride octadecene copolymer (PA-18, Gulf Oil Chemicals Co.), maleic anhydride decene copolymer (PA-10, Gulf Oil Chemicals Co.), or maleic anhydride tetradecene copolymer (PA-14, Gulf Oil Chemicals Co.). The anhydride copolymer is present in an amount sufficient to provide adhesion to a number of substrates, for example, polyethylene, polycarbonate, and metals such as copper, and some adhesion to paper.

Due to the brittle nature of the anhydride copolymer as well as its susceptibility to hydrolysis in the presence of water which leads to low insulation resistance and corrosion of metals, and due to its insufficient adhesion to substrates, it has been found that a flexibilizing polymer such as polyisobutylene, styrene olefin styrene block polymer, or ethylene copolymerized with vinyl acetate, acrylate esters, methacrylate esters, or alpha-olefins, provides improvement. The flexibilizing polymer is a rubbery, compatible, adherent material present in an amount sufficient to provide a soft, flexible coating. Desirably it is soluble in the solvent system. Preferably it is an ethylene vinylacetate copolymer with 33% vinyl acetate (Elvax 150®, E. I. DuPont de Nemours Corp.) or an ethylene vinylacetate copolymer with 28% vinyl acetate (Elvax 240® or Elvax 250®, E. I. DuPont de Nemours Corp).

The composition of the present invention also includes a hydrophobic, soluble, compatible fluoroaliphatic radical-containing composition, i.e., compounds or polymers, or mixtures thereof, to provide hydrophobicity to the mixture so as to result in a water repellant product. By fluoroaliphatic radical is meant a monovalent, fluorinated, aliphatic, preferably saturated, organic radical having an average of at least 5 to 14 carbon atoms. The skeletal chain or the radical can be straight, branched, or, if sufficiently large, cyclic, and can be interrupted by divalent oxygen atoms or trivalent nitrogen atoms bonded only to carbon atoms. Preferably, it is fully fluorinated, but hydrogen or chlorine atoms can be present as substituents on the skeletal chain, provided that not more than one atom of either hydrogen or chlorine is present for every two carbon atoms in the skeletal chain, and the radical contains at least a terminal perfluoromethyl group. Preferably, the radical has about 6 to 10 carbon atoms. The fluoroaliphatic radical-containing compositions of this invention can contain radicals which are the same as, or different from, one another. The fluoroaliphatic radical-containing compositions include vinyl polymers such as those disclosed in US—A—3,896,251. Particularly useful are acrylate polymers with urethane-containing side chains, blends of fluoroaliphatic radicals containing acrylate polymers and fluorocarbon compounds or adducts such as described in US—A—4,215,205. Compounds which are useful include adducts of fluoroaliphatic radical containing alcohols and organic isocyanates such as the urethane adduct of two moles of N-ethylperfluoroalkylsulfonamidoethanol and one mole toluene diisocyanate, which adduct is hereinafter referred to as Compound I (3M). A particularly useful polymer is 57:28:15 N-methylperfluorooctylsulfonamidoethyl methacrylate: N-ethylperfluorooctylsulfonamidoethylalcohol [toluene-2,4-diisocyanate] hydroxypropyl methacrylate: butyl acrylate, hereinafter referred to as Compound II (3M), and a polymer adduct mixture, hereinafter referred to as Compound III (3M) and contains

31.5 parts by weight of methyl N-methylperfluorooctylsulfonamidoethylacrylate

31.5 parts by weight of butyl N-methylperfluorooctylsulfonamido methacrylate

18 parts by weight of dimethacrylate of 2000 molecular weight tetra-methylene oxide diol (Polymeg 2000, Quaker Oats Co.)

9 parts by weight of butyl acrylate, and

10 parts by weight of N-ethylperfluorooctylsulfonamido ethanol toluene diisocyanate adduct which has been converted to carbodiimide.

Other useful fluoroaliphatic vinyl containing polymers are described in US—A—2,803,615, 3,462,296, 3,950,298, 3,574,791 (ex. 17), and 3,787,351.

Up to 10 weight percent of the dried composition of a soluble, compatible silane mercaptan having 4 to 17 carbon atoms such as 1) the class of omega-trialkoxysilylalkylmercaptans, wherein the alkoxy group has up to 3 carbon atoms ($C_1$ is preferred) and the alkyl group has 2 to 8 carbon atoms, exemplified by gamma-mercaptopropyltrimethoxysilane (A-189, Union Carbide), or 2) an alkyl or alkoxy mercaptan of 4 to 24 carbon atoms, exemplified by octadecene mercaptan, in the composition inhibits corrosion of the metal.

A sufficient amount of an antioxidant is included in the formulation to prevent oxidation of the exposed metal surfaces. Suitable antioxidants include a hindered phenol such as tetrakis[methylene 3-(3',5'-di-tert-butyl-4'-hydroxyphenyl)propionate]methane (Irganox 1010®, Ciba-Geigy Corp.), thiodiethylene bis-(3,5-di-tert-butyl-4-hydroxy)hydrocinnamate (Irganox 1035®, Ciba-Geigy Corp.), or octadecyl-3-(3',5'-di-tert-butyl-4'-hydroxyphenyl)propionate (Irganox 1076®, Ciba-Geigy Corp.), a copper ion scavenger and antioxidant such as MD1024 (Ciba-Geigy Corp.), or a compound such as distearyl thiodipropionate (Cyanox STDP®, American Cyanamid Polymer and Chem. Dept.).

For ease of application, the composition is in solution form. Since polycarbonate is widely used in the communication field, and since polycarbonate is susceptible to being soluble in certain solvents, solvents useful in the present invention solvate the anhydride and flexibilizing polymers, but not the polycarbonate. The solvent mixture provides the desired solubility for the components of the mixture and not to polycarbonate, and also provides a suitable evaporation rate after application. Freon TF provides non-flammability to the coating composition. This property is desirable due to the frequent application of the composition in enclosed areas, such as indoors or in manholes, and also on live wires.

The composition of the present invention, which is insulative on electrical wires and between neighboring contacts but deformable under contact spring pressure to allow metal to metal contact, is applied in a thickness in the range of 25 to 250 microns, preferably 25 to 50 microns as a wire coating composition, and preferably 50 to 180 microns as a contact enhancing composition, and may be sprayed or brushed onto the connecting block, but preferably it is dipped. The composition dries to a tack-free state at ambient conditions in 10 to 40 minutes. The evaporation rate, desirably, is slow enough so as not to clog a spray head, and fast enough so as to result in a reasonably rapid drying speed for the applied composition.

The wire coating composition is useful to form a smooth coated film on bare wire or on degraded paper or polyethylene insulated wire in the field. It is also useful in maintaining the integrity of spiral wrapped paper wires.

The electrical contact enhancing composition will form a smooth, deformable, resilient, adherent film on low pressure sliding electrical connections. It is useful when replacing gold plate contacts with copper alloys coated with metals such as tin, tin-lead, and silver or it allows the use of very thin gold plate.

Objects and advantages of this invention are further illustrated by the following examples, but the particular materials and amounts thereof recited in these examples, as well as other conditions and details, should not be construed to unduly limit this invention.

Example 1 (samples 1 to 21) relates to wire coating compositions and Examples 2 to 5 (samples 22 to 52) relate to electrical contact-enhancing compositions.

Example 1

The following method was used to prepare sample compositions 1—19 of Table I. In a suitable vessel the indicated amounts of antioxidant, flexibilizing polymer, aliphatic hydrocarbon, and low molecular weight alcohol were heated and stirred to 55°C. When the flexibilizing polymer was dissolved, the anhydride copolymer was added. This was stirred until it was dissolved. Then the temperature of the mixture was adjusted to 35°C and Freon TF was added. The temperature was maintained at 35°C and the mixture was stirred for 10 minutes. Next, the indicated amount of fluorocarbon compound and the mercaptan compound were added and mixed for 30 minutes at 35°C. The solutions were allowed to cool for 24 hours and then testing was done.

Table I gives the wire coating compositions of samples 1—21.

5

TABLE I
Wire coating compositions[*]

| Sample No. | ELV(%)[d] | Heptane | Isopropyl Alc | AHC(%)[e] | Freon TF | FC(%)[a] | SA(%)[g] | FP(%)[f] | EEA(%)[b] | IRG(%)[c] |
|---|---|---|---|---|---|---|---|---|---|---|
| 1 | .87(14)[1] | 8 | 4 | 4.27(70)[3] | 80.5 | 2.13(14)[2] | | | | .13(2) |
| 2 | .67(12)[1] | 8 | 4 | 3.33(61)[3] | 80.5 | 3.33(25)[2] | | | | .13(2) |
| 3 | .45(10)[1] | 8 | 4 | 2.27(49)[3] | 80.5 | 4.53(39)[2] | | | | .13(2) |
| 4 | 1.83(28)[1] | 8 | 4 | 3.67(58)[3] | 80.5 | 1.83(12)[2] | | | | .13(2) |
| 5 | 1.47(25)[1] | 8 | 4 | 2.93(52)[3] | 80.5 | 2.93(21)[2] | | | | .13(2) |
| 6 | 1.04(22)[1] | 8 | 4 | 2.09(43)[3] | 80.5 | 4.13(33)[2] | | | | .13(2) |
| 7 | 2.93(44.5)[1] | 8 | 4 | 2.93(44.5)[3] | 80.5 | 1.47(9)[2] | | | | .13(2) |
| 8 | 2.44(41)[1] | 8 | 4 | 2.44(41)[3] | 80.5 | 2.44(16)[2] | | | | .13(2) |
| 9 | 1.83(35)[1] | 8 | 4 | 1.83(35)[3] | 80.5 | 3.66(28)[2] | | | | .13(2) |
| 10 | 1.7(30)[1] | 8 | 4 | 3.0(52)[1] | 80.6 | 2.6(18)[2] | | | | |
| 11 | 1.7(30)[1] | 8 | 4 | 3.0(52)[2] | 80.6 | 2.6(18)[2] | | | | |
| 12 | | 20 | 1 | 3.0(53)[1] | 71.5 | 3(21)[2] | | | 1.5(26) | |
| 13 | | 20 | 1 | 3.0(53)[3] | 71.5 | 3(21)[2] | | 1.5(26)[1] | | |
| 14 | | 20 | 1 | 3.0(53)[3] | 71.5 | 3(21)[2] | | 1.5(26)[2] | | |

TABLE I (contd.)
Wire coating compositions[*]

| Sample No. | ELV(%)[d] | Heptane | Isopropyl Alc | AHC(%)[e] | Freon TF | FC(%)[a] | SA(%)[g] | FP(%)[f] | EEA(%)[b] | IRG(%)[c] |
|---|---|---|---|---|---|---|---|---|---|---|
| 15 | 1.5(26)[2] | 20 | 1 | 3.0(53)[3] | 71.5 | 3(21)[2] | | | | |
| 16 | 1.5(26)[3] | 20 | 1 | 3.0(53)[3] | 71.5 | 3(21)[2] | | | | |
| 17 | 1.7(29)[1] | 8 | 4 | 3.0(50)[3] | 80.6 | 2.6(18)[2] | 0.1(1.7) | | | 0.1(1.7) |
| 18 | 1.7(30)[1] | 8 | 4 | 3.0(52)[3] | 80.6 | 2.6(26)[1] | | | | |
| 19 | 1.7(30)[1] | 8 | 4 | 3.0(52)[3] | 80.6 | 1.6(26)[3] | | | | |
| 20 | Control[h] | | | | | | | | | |
| 21 | Control[i] | | | | | | | | | |

[*] All numbers are in grams, percents are weight percents of dried compositions
[a] FC=Fluorocarbon polymer,
  [1] Compound I, above
  [2] Compound II, above
  [3] Compound III, above
[b] EEA=Ethylene ethyl acrylate, 18% ethyl acrylate DPDA 9169® (Union Carbide Corp.)
[c] IRG=Irganox-1010®
[d] ELV=Ethylene-vinylacetate copolymer
  [1] Elvax 150
  [2] Elvax 240
  [3] Elvax 250
[e] AHC=anhydride copolymer
  [1] PA-10
  [2] PA-14
  [3] PA-18
[f] FP=flexibilizing polymer
  [1] Butyl Rubber (Exxon Butyl 165®, Exxon Chemical Co.)
  [2] Polyisobutylene (Vistanex L-120®, Exxon Chemical Co.)
[g] SA=silane, gamma-mercaptopropyltrimethoxysilane
[h] B-Insulation Spray (Sprayon Products, Div. of the Sherwin-Williams Co.)
[i] 85/15 Ethyl methacrylate/butyl acrylate (Scotch® Coating 16, 3M)

Table II shows the results of copper adhesion, polyethylene adhesion, and spiral paper adhesion tests using the compositions of Table I. In the copper and polyethylene adhesions tests, a score of 5 represents perfect adhesion and a score of 0 represents no adhesion. In the spiral paper adhesion test, a non-sprayed control wire gave a result of 50%.

Adhesion to copper and polyethylene was measured by a tape test, ASTM D3359-74, Method B, Cross Cut Tape Test, using 110 copper alloy as well as 0.92 density polyethylene (DFD 6005 Natural from Union Carbide Corp.) for substrates. Scotchbrand 710® tape (3M) was used. The average result of four samples was recorded. For the paper adhesion test, spiral wrapped, paper insulated 20 AWG aluminum telephone wire (Olex, Australia) was used. This wire was sprayed with the solution being tested and allowed to dry overnight. The wire was then wrapped around a 2.7 mm diameter rod and the number of turns without opens (places where the paper separated from itself) were counted. This was repeated four times and the result was recorded as the percentage of turns without opens.

TABLE II
Adhesion data

| Ex. No. | Copper adhesion | Polyethylene adhesion | Spiral paper adhesion (%) |
|---|---|---|---|
| 1 | 4.0 | 3.0 | 86 |
| 2 | 5.0 | 3.0 | 75 |
| 3 | 4.5 | 4.0 | 75 |
| 4 | 4.0 | 0 | 100 |
| 5- | 4.0 | 2.5 | 93 |
| 6 | 4.0 | 3.5 | 72 |
| 7 | 0 | 0 | 100 |
| 8 | 3.0 | 1.5 | 89 |
| 9 | 4.0 | 1.5 | 82 |
| 10 | 5.0 | 3.5 | 100 |
| 11 | 4.5 | 0.5 | 81 |
| 12 | 4.5 | 3.5 | 80 |
| 13 | 4 | 2.7 | 47 |
| 14 | 3.2 | 2.5 | 64 |
| 15 | 4 | 3.7 | 69 |
| 16 | 3.7 | 3.5 | 61 |
| 17 | 5 | 0.7 | 86 |
| 18 | 4 | 4.5 | 61 |
| 19 | 5 | 1.7 | 86 |
| Control 20 | 0 | 0 | 61 |
| Control 21 | 4.7 | 0 | 64 |

The data of Table II shows the effect of varying the coating composition. Samples 7, 20, and 21 are outside the present invention. Sample 7 has greater than 41% flexibilizing polymer which results in poor copper and polyethylene adhesion. Sample 5, within the present invention, provided good adhesion to all three substrates. The silane mercaptan added to Sample 17 had improved copper adhesion but interfered

8

with polyethylene adhesion. Control Samples 20 and 21 gave adhesion results to the three substrates that are poorer than compositions within the present invention.

In Examples 2 to 5, thirty-one formulations (samples 22 to 52) were used for testing as contact enhancing compositions. These formulations are given in Table III.

TABLE III

| Sample No. | AOX[I] | P** | Rubber[II] | P** | Heptane | IPA[III] | AC[IV] | P** | M[V] | P** | FR[VI] | FC[VII] | P** |
|---|---|---|---|---|---|---|---|---|---|---|---|---|---|
| 22 | 0 | 0 | 5.1 | 29.6 | 16 | 8 | 9.0 | 52.2 | | | 54.1 | 7.8 | 18.1 |
| 23 | 0.9 | 5.0 | 5.1 | 28.1 | 16 | 8 | 9.0 | 49.7 | | | 53.2 | 7.8 | 17.2 |
| 24 | .3 | 4.1 | 7.0 | 95.9 | 16 | 8 | 0 | | | | 68.7 | 0 | |
| 25 | .3 | 2.1 | 5.1 | 35.4 | 16 | 8 | 9 | 62.5 | | | 61.6 | 0 | |
| 26 | .3 | 3.5 | 5.1 | 59.8 | 16 | 8 | 0 | | | | 62.8 | 7.8 | 36.6 |
| 27 | .3 | 1.7 | 5.1[g] | 29.1 | 21 | 3 | 9 | 51.4 | | | 53.8 | 7.8 | 17.8 |
| 28 | .3 | 1.7 | 5.1[f] | 29.1 | 16 | 8 | 9 | 51.4 | | | 53.8 | 7.8 | 17.8 |
| 29 | .3 | 3.1 | 5.1 | 53.6 | 16 | 8 | 0 | | 1.0 | 10.5 | 61.8 | 7.8 | 32.8 |
| 30 | 1.33 | 6.8 | 5.9 | 30.0 | 20 | 13.3 | 10.5 | 53.5 | .1 | .5 | 44.3 | 4.5 | 9.2 |
| 31 | .67<br>.67[c] | 3.4<br>3.4 | 5.93 | 30.3 | 20 | 13.3 | 10.5 | 53.6 | | | 44.3 | 4.53 | 9.3 |
| 32 | .67<br>.67[d] | 3.4<br>3.4 | 5.93 | 30.3 | 20 | 13.3 | 10.5 | 53.6 | | | 44.3 | 4.53 | 9.3 |
| 33 | 2.67 | 12.8 | 5.93 | 28.3 | 20 | 13.3 | 10.5 | 50.2 | | | 44.3 | 4.53 | 8.7 |
| 34 | 1.33[a] | 6.8 | 5.93 | 30.3 | 20 | 13.3 | 10.5 | 53.6 | | | 44.3 | 4.53 | 9.3 |
| 35 | 1.33[b] | 6.8 | 5.93 | 30.3 | 20 | 13.3 | 10.5 | 53.6 | | | 44.3 | 4.53 | 9.3 |
| 36 | .67<br>.67[e] | 3.4<br>3.4 | 5.93 | 30.3 | 20 | 13.3 | 10.5 | 53.6 | | | 44.3 | 4.53 | 9.3 |

TABLE III (Cont'd)

| Sample No. | AOX[I] | P** | Rubber[II] | P** | Heptane | IPA[III] | AC[IV] | P** | M[V] | P** | FR[VI] | FC[VII] | P** |
|---|---|---|---|---|---|---|---|---|---|---|---|---|---|
| 37 | 1.33 | 6.5 | 5.93 | 28.8 | 20 | 13.3 | 10.5 | 51.0 | 1.0 | 4.9 | 44.3 | 4.53 | 8.8 |
| 38 | 1.33 | 9.4 | 4.17[f] | 29.4 | 25 | 10 | 7.4 | 52.2 | | | 49.0 | 3.17 | 8.9 |
| 39 | .13 | 2.2 | 1.7 | 28.9 | 8 | 4 | 3.0 | 51.1 | | | 80.6 | 2.6 | 17.7 |
| 40 | 1.33 | 6.8 | 5.9 | 30.0 | 20 | 13.3 | 10.5 | 53.5 | .1 | .5 | 44.3 | 4.5 | 9.2 |
| 41 | 1.3[b] | 6.8 | 5.9 | 30.2 | 20 | 13.3 | 10.5[i] | 53.8 | | | 44.3 | 4.53 | 9.2 |
| 42 | 1.3[b] | 6.8 | 5.9 | 30.2 | 20 | 13.3 | 10.5 | 53.8 | | | 44.3 | 4.53[j] | 9.2 |
| 43 | 2[b] | 7.8 | 10.5 | 40.8 | 35 | 15 | 10.5 | 40.8 | | | 70.2 | 6.8 | 10.6 |
| 44 | .3 | 1.5 | 5.1[g] | 25.7 | 21 | 3 | 9 | 45.4 | | | 53.8 | 7.8 | 27.4 |
| 45 | .7[b] | 3.2 | 4.2 | 19.4 | 15 | 10 | 2.1 | 9.7 | | | 31.3 | 36.7 | 67.7 |
| 46 | .83[b] | 2.5 | 3.2 | 9.7 | 20 | 10 | 16 | 48.8 | | | 18 | 32 | 39.0 |
| 47 | 1[b] | 5 | 12 | 57 | 36.7 | 13.3 | 4 | 19 | | | 23 | 20 | 19 |

0 070 627

TABLE III (contd.)

| Sample No. | AOX[I] | P** | Rubber[II] | P** | Heptane | IPA[III] | AC[IV] | P** | M[V] | P** | FR[VI] | FC[VII] | P** |
|---|---|---|---|---|---|---|---|---|---|---|---|---|---|
| 48 | 1.33[b] | 6.8 | 5.93 | 30.2 | 20 | 13.3 | 10.5 | 53.8 | | | 44.3 | 4.53 | 9.2 |
| 49 | 2[b] | 6.8 | 8.9 | 30.2 | 20 | 13.3 | 15.8 | 53.8 | | | 33.2 | 6.8 | 9.2 |
| 50 | 2[b] | 7.1 | 8.5[f] | 30.3 | 45 | 5 | 15 | 53.4 | | | 68 | 6.5 | 9.2 |
| 51 | 2[b] | 17.8 | 3[h] | 26.7 | 45 | 5 | 5.3 | 47.3 | | | 87.4 | 2.3 | 8.2 |
| 52 | 2[b] | 5.2 | 8 | 21 | 35 | 15 | 25.4 | 66.6 | | | 57.8 | 6.8 | 7.1 |

\* Numbers are in grams, except in the percent (P) columns, where percents refer to weight percent of the substance, in the dried composition given in the column immediately preceding

\*\* Percent (weight percent of dried composition)

[I]AOX=Antioxidant Irganox 1010®, except for:

  [a] Irganox 1035®, hindered phenol antioxidant (Ciba-Geigy Corp.)

  [b] Irganox 1076®, hindered phenol antioxidant (Ciba-Geigy Corp.)

  [c] substituted benzotriazole (Tinuvin 328®, Ciba-Geigy Corp.)

  [d] copper ion scavenger and antioxidant (MD 1024, Ciba-Geigy Corp.)

  [e] distearyl thiodipropionate (Cyanox STDP®, American Cyanamid Polymer and Chem. Dept.)

[II]Elvax 150, ethylene-vinylacetate copolymer (E. I. DuPont de Nemours Corp.), except for:

  [f] Elvax 240®, ethylene-vinylacetate copolymer (E. I. DuPont Corp.)

  [g] Kraton G 1650®, styrene ethylene butylene styrene block copolymer rubber (Shell Chemical Co.)

  [h] DPDA 6182 ethylene ethyl acrylate (Union Carbide Corp.)

[III]IPA=isopropyl alcohol

[IV]AC=anhydride copolymer, PA-18 maleic anhydride-octadecene copolymer (Gulf Oil Chemicals Co.), except for:

  [i] PA-10, maleic anhydride-decene copolymer (Gulf Oil Chemicals Co.)

[V]M=mercaptan, gamma-mercaptopropyltrimethoxysilane (A-189, Union Carbide Corp.)

[VI]FR=trichlorotrifluoroethane (Freon TF®, E. I. DuPont de Nemours Corp.)

[VII]FC=fluorocarbon polymer (compound II, see above), except for:

  [j] fluorocarbon polymer (compound I, see above)

A satisfactory contact enhancing composition provides protection against insulation resistance (IR) degradation in both humid and corrosive (salt fog) environments. It also provides maintenance of a low connection resistance at contact interfaces. Many samples gave satisfactory results in any one test, but a useful contact enhancing composition provided good results in all tests. All evaluations utilized the industry standard 5-pin #3AB protectors and 10-pair receptacle blocks No. R713-1 (Reliable Electric Co., Franklin Park, IL). The receptacles were coated with the sample compositions of Table III to provide a dried film 25 to 75 microns thick. In each test, samples were uniformly coated.

Example 2

Compositions 22—52 of Table III were prepared using the method of Example 1.

Insulation resistance, measured in ohms, was used to define electrical circuit isolation. Only the median value in each set is reported. The normal standard is in the range of $10^6$ to $10^8$ ohms minimum.

A high temperature and high humidity test, run essentially as described in AT&T Network Department Product Evaluation Report #149, Issue 2, ¶ 2.0107, was conducted under high temperature and high humidity conditions (52°C and 90—95 percent relative humidity). Humidity absorption and subsequent hydrolysis of an insulating composition resulted in insulation resistance degradation. Data collected initially and after 4 hours, 1 day, 2 days, and 3 days is shown in Table IV for samples 22—30, 39, 49, and 50 from Table III and a control sample which was uncoated.

TABLE IV
High temperature and high humidity test data
IR data in ohms

| Sample No. | Initial | 4 hrs. | Day 1 | Day 2 | Day 3 |
|---|---|---|---|---|---|
| 22 | $14 \times 10^{10}$ | $48 \times 10^5$ | $18 \times 10^5$ | $14 \times 10^7$ | $39 \times 10^6$ |
| 23 | $17 \times 10^{10}$ | $42 \times 10^5$ | $14 \times 10^5$ | $11 \times 10^7$ | $31 \times 10^6$ |
| 24 | $13 \times 10^{10}$ | $36 \times 10^8$ | $28 \times 10^8$ | $59 \times 10^8$ | $57 \times 10^8$ |
| 25 | $21 \times 10^{10}$ | $44 \times 10^5$ | $13 \times 10^5$ | $50 \times 10^6$ | $30 \times 10^6$ |
| 26 | $25 \times 10^{10}$ | $14 \times 10^9$ | $10 \times 10^9$ | $13 \times 10^9$ | $13 \times 10^9$ |
| 27 | $17 \times 10^{10}$ | $82 \times 10^5$ | $16 \times 10^6$ | $13 \times 10^7$ | $12 \times 10^7$ |
| 28 | $15 \times 10^{10}$ | $56 \times 10^5$ | $12 \times 10^6$ | $15 \times 10^7$ | $10 \times 10^7$ |
| 29 | $39 \times 10^{10}$ | $37 \times 10^9$ | $21 \times 10^9$ | $31 \times 10^9$ | $34 \times 10^9$ |
| 30 | $11 \times 10^{10}$ | $17 \times 10^9$ | $8 \times 10^9$ | $4 \times 10^9$ | $10 \times 10^9$ |
| 39 | $21 \times 10^9$ | | $36 \times 10^9$ | $30 \times 10^9$ | $29 \times 10^9$ |
| 49 | $25 \times 10^9$ | | $23 \times 10^8$ | $97 \times 10^6$ | $70 \times 10^6$ |
| 50 | $21 \times 10^9$ | | $75 \times 10^8$ | $63 \times 10^8$ | $61 \times 10^8$ |
| Control | $19 \times 10^{10}$ | $67 \times 10^8$ | $48 \times 10^8$ | $95 \times 10^8$ | $81 \times 10^8$ |

The results of Table IV show that in the high temperature and high humidity test a beneficial effect on insulation resistance was achieved when mercaptan was included in the composition (sample Nos. 29 and 30). Good IR results were obtained with samples 24, 26, 29, 30, 39, 49, 50 and the control.

Example 3

A second test for insulation resistance was conducted in a salt fog atmosphere, essentially as described in ASTM test method B117-61. The prepared samples were subjected to a direct salt water spray. Simultaneously 50 volts DC was applied to adjacent tip and ring terminals. The resistances in ohms initially and after 24 hours are shown in Table V. The control sample receptacle block, a copper alloy contact with tin-lead plate, was uncoated.

13

TABLE V
Insulation resistance in ohms
Salt spray data

| Sample No. | Initial | 24 hrs. |
|---|---|---|
| 39 | $1.1 \times 10^{11}$ | $7.0 \times 10^7$ |
| 40 | $1.2 \times 10^{11}$ | $2.1 \times 10^3$ |
| 45 | $1.2 \times 10^{11}$ | $3.3 \times 10^3$ |
| 47 | $1.6 \times 10^{12}$ | $8.6 \times 10^6$ |
| 51 | $1.9 \times 10^{11}$ | $4.5 \times 10^3$ |
| Control | $8.0 \times 10^{10}$ | 850 |

The data of Table V show improved life of a termination system in corrosive environments for a terminal treated with a contact enhancing composition of the invention compared to an untreated termination system (control).

Example 4

High connection resistance, the resistance between the contact receptacle and the protector pin, is undesirable in sliding connections. Materials, such as some plastics and rubbers, which are good insulators generally prevent or hinder electrical contact. The compositions of the present invention are deformed and displaced by pin insertion, thus allowing electrical contact.

Oxidation at the contact interface leads to high connection resistance. The Thermal Aging test, run essentially as disclosed in "AT&T Business Services Evaluation Criteria Flat Undercarpet Telephone Cable" bulletin, Appendix F, March 10, 1980, was conducted to measure the effect of aging on a connection. Dry heat (118°C) was used for 34 days, with readings of the contact interface, in milliohms, taken at 2, 8, 16, and 34 days. A termination system coated with the composition of sample 39 of Table III and an uncoated control sample were used, as shown in Table VI.

TABLE VI
Thermal aging
Change in connection resistance
Data in milliohms

| Sample No. | 2 | | 8 | | 16 | | 34 | |
|---|---|---|---|---|---|---|---|---|
| | Avg. | High | Avg. | High | Avg. | High | Avg. | High |
| 39 | .128 | .820 | .400 | 1.025 | .626 | 1.614 | 1.062 | 3.467 |
| Control | .312 | .832 | .761 | 4.420 | 1.721 | 23.357 | 2.321 | 17.593 |

The data of Table VI show that the composition of sample 39 provided an environmental sealant at the contact interface, thus retarding oxidation, when compared to an untreated contact (control).

Example 5

A plug-unplug test of 200 cycles run essentially as described in AT&T Network Department Product Evaluation Report #149, Issue 2, ¶2.0104 *Contact Resistance Qualification Test* was performed in an atmosphere of 52°C and 90—95% relative humidity. In this atmosphere the protectors were cycled plug to unplug five times an hour with 6 minutes plugged in and 6 minutes in the out or detent position. Each trial was conducted for a total of 20 cycles a day for 10 days. After an overnight dry-out the parts were tested for changes in connection resistance. The data is shown in Table VII for samples 22—29 and 31—52 of Table III, and an uncoated tin/lead coated contact as a control.

**0 070 627**

TABLE VII
Contact resistance (plug-unplug)
Change in connection resistance in milliohms

| Sample No.* | Overall average** |
|---|---|
| 22 | 4.5 |
| 23 | 2.7 |
| 24 | 7.4 |
| 25 | 4.3 |
| 26 | 3.1 |
| 27 | 2.9 |
| 28 | 1.9 |
| 29 | 2.8 |
| 31 | 2.1 |
| 32 | 2.6 |
| 33 | 3.2 |
| 34 | 2.6 |
| 35 | 2.3 |
| 36 | 2.2 |
| 37 | 4.6 |
| 38 | 3.1 |
| 39 | .50 |
| 40 | 1.2 |
| 41 | .88 |
| 42 | 1.15 |
| 43 | 1.9 |
| 44 | 2.9 |
| 45 | .96 |
| 46 | 1.0 |
| 47 | .51 |
| 48 | 2.3 |

# 0 070 627

TABLE VII (contd.)
Contact resistance (plug-unplug)
Change in connection resistance in milliohms

| Sample No.[*] | Overall average[**] |
|---|---|
| 49 | 1.8 |
| 50 | 2.1 |
| 51 | 3.0 |
| 52 | 2.5 |
| Control | 5.2 |

[*] all samples were coated out to a dry thickness of about 50 microns.
[**] Represents an average of 100 data points for samples 22—29, 200 data points for samples 31—39, 600 data points for the Control, and 400 data points for samples 40—52.

The data of Table VII show that the results for samples No. 23, 27, 28, and 31—52, within the invention, were superior to the control in the plug-unplug test. The data also show that various antioxidants in the formulation of the compositions of the present invention contribute to their good performance in this test.

## Claims

1. A coating composition for electrical wires and connectors comprising an admixture in weight percent of the dried composition of:
 a. 8 to 75 percent of an anhydride copolymer which is the reaction product of:

1) alkyl-, phenyl- or phenylalkyl-substituted or unsubstituted cyclic anhydride in which said alkyl group contains 1 to 6 carbon atoms and said cyclic group contains 4 to 15 carbon atoms, and
2) a $C_{10}$ to $C_{24}$ aliphatic unsaturated hydrocarbon;

 b. 8 to 75 percent of a flexibilizing polymer selected from polyisobutylene, styrene olefin styrene block polymer, and polymers of ethylene copolymerized with vinyl acetate, acrylate esters, methacrylate esters and alpha-olefins;
 c. 5 to 75 percent of a hydrophobic, compatible, fluoroaliphatic radical-containing composition which contains a monovalent, fluorinated, aliphatic organic radical having an average of at least 5 to 14 carbon atoms which optionally can be interrupted by divalent O-atoms or trivalent N-atoms bonded to C-atoms;
 d. 0 to 10 percent of a mercaptan compound, which compound is selected from a silane mercaptan having 4 to 17 carbon atoms and an alkyl- or alkoxy-mercaptan of 4 to 24 atoms; and
 e. 0 to 20 percent of an antioxidant compound.
2. The composition according to claim 1 wherein:
 a. said anhydride copolymer is present in the range of 35 to 70,
 b. said flexibilizing polymer is present in the range of 10 to 41 percent,
 c. said fluoroaliphatic radical-containing composition is present in the range of 10 to 40 percent,
 d. said mercaptan compound is present in an amount of 0 to 10 weight percent, and
 e. said antioxidant compound is present in the range of 0 to 5 percent.
3. The composition according to Claim 1 wherein:
 a. said anhydride copolymer is present in the range of 10 to 67 percent,
 b. said flexibilizing polymer is present in the range of 10 to 57 percent,
 c. said fluoroaliphatic radical-containing composition is present in the range of 7 to 68 percent,
 d. said mercaptan compound is present in the range of 0 to 7 percent, and
 e. said antioxidant compound is present in the range of 1.0 to 20 percent.
4. A coating solution for electrical wires and connectors characterized by 4 to 30 weight percent of the total solution of the composition according to any preceding claim, and 96 to 70 weight percent of the total solution of a solvent system containing a mixture of at least one $C_6$ to $C_9$ aliphatic hydrocarbon, at least one alcohol with one to four carbon atoms, and trichlorotrifluoroethane.
5. An electrical wire or connector comprising a substrate having coated on at least one surface thereof a composition according to of claims 1—3.
6. An article according to Claim 5 wherein said connector is an electrical receptacle block having at least one set of metallic contacts of a polyethylene or paper insulated electrical wire.

16

**Revendications**

1. Composition de revêtement pour connecteurs et conducteurs électriques, comprenant un mélange, en % en poids de la composition séchée, de:

a. 8 à 75% d'un copolymère d'anhydride qui est le produit de réaction de:

1) un anhydride cyclique non substitué ou substitué par alkyle, phényle ou phénylalkyle, dans lequel le groupe alkyle comporte de 1 à 6 atomes de carbone et le groupe cyclique de 4 à 15 atomes de carbone, et

2) un hydrocarbure insaturé aliphatique $C_{10}$ à $C_{24}$;

b. 8 à 75% d'un polymère flexibilisateur choisi parmi le polyisobutylène, un polymère séquentiel de styrène-oléfine-styrène, et les polymères d'éthylène copolymérisé avec l'acétate de vinyle, les esters acrylate, les esters méthacrylate, et les alpha-oléfines;

c. 5 à 75% d'une composition comportant un radical fluoroaliphatique, compatible, hydrophobe, contenant un radical organique aliphatique, fluoré, monovalent, comportant une moyenne d'au moins 5 à 14 atomes de carbone qui peuvent éventuellement être interrompus par des atomes O divalents ou des atomes N trivalents liés aux atomes C;

d. 0 à 10% d'un composé mercaptan formé d'un silane mercaptan de 4 à 17 atomes de carbone ou d'un alkyl- ou alcoxy-mercaptan de 4 à 24 atomes de carbone; et

e. 0 à 20% d'un composé antioxydant.

2. Composition suivant la revendication 1 caractérisée en ce que:

a. elle contient le copolymère d'anhydride à raison de 35 à 70%,

b. elle contient le polymère flexibilisateur à raison de 10 à 41%,

c. elle contient la composition comportant un radical fluoroaliphatique à raison de 10 à 40%, et d. elle contient le composé antioxydant à raison de 0 à 5%.

3. Composition suivant la revendication 1, caractérisée en ce que:

a. elle contient le copolymère d'anhydride à raison de 10 à 67%,

b. elle contient le polymère flexibilisateur à raison de 10 à 57%,

c. elle contient la composition comportant un radical fluoroaliphatique à raison de 7 à 68%,

d. elle contient le composé mercaptan à raison de 0 à 7%, et

e. elle contient le composé antioxydant à raison de 1,0 à 20%.

4. Solution de revêtement pour connecteurs et conducteurs électriques, caractérisée en ce qu'elle contient la composition suivant l'une quelconque des revendications précédentes à raison de 4 à 30% en poids de la solution totale et, à raison de 96 à 70% en poids de cette solution totale, un système solvant contenant un mélange d'au moins un hydrocarbure aliphatique $C_6$—$C_9$, au moins un alcool de 1 à 4 atomes de carbone et du trichlorotrifluoréthane.

5. Connecteur ou conducteur électrique, comprenant un substrat dont au moins une surface est revêtue par une composition suivant l'une quelconque des revendications 1 à 3.

6. Article suivant la revendication 5, caractérisé en ce que le connecteur est un bloc récepteur électrique comportant au moins un jeu de contacts métalliques d'un conducteur électrique isolé au polyéthylène ou au papier.

**Patentansprüche**

1. Überzugszusammensetzung für elektrische Drähte und Verbinder mit einer Mischung von, in Gewichtsprozent der getrockneten Zusammensetzung,

a. 8 bis 75 Prozent eines Anhydridcopolymers, das das Reaktionsprodukt

1) eines alkyl-, phenyl- oder phenylalkylsubstituierten oder nichtsubstituierten zyklischen Anhydrids, in dem die genannte Alkylgruppe 1 bis 6 Kohlenstoffatome und die genannte zyklische Gruppe 4 bis 15 Kohlenstoffatome enthält, und

2) eines aliphatischen ungesättigten $C_{10}$- bis $C_{24}$-Kohlenwasserstoffes ist;

b. 8 bis 75 Prozent eines flexibilisierend wirkenden Polymers, das ausgewählt ist aus dem Polyisobutylen, dem Styrol, den Styrol-Olefin-Styrol-Blockpolymeren, den mit Vinylacetat copolymerisierten Ethylenpolymeren, den Acrylatestern, Methacrylatestern und α-Olefinen;

c. 5 bis 75 Prozent einer hydrophoben, verträglichen, fluoraliphatischen, radikaleenthaltenden Zusammensetzung, die ein einwertiges fluoriertes aliphatisches organisches Radikal mit durchschnittlich mindestens 5 bis 14 Kohlenstoffatomen enthält, das durch zweiwertige O-Atome oder dreiwertige N-Atome unterbrochen sein kann, die mit C-Atomen verbunden sind;

d. 0 bis 10 Prozent einer Mercaptanverbindung, die aus den Silanmercaptanen mit 4 bis 17 Kohlenstoffatomen und den Alkyl- oder Alkoxymerkaptanen mit 4 bis 24 Atomen ausgewählt ist, und

e. 0 bis 20 Prozent einer Antioxidationsverbindung.

2. Zusammensetzung nach Anspruch 1, dadurch gekennzeichnet, daß

17

a. das genannte Anhydridcopolymer in einer Menge im Bereich von 35 bis 70 Prozent,

b. das genannte flexibiliserend wirkende Polymer in einer Menge im Bereich von 10 bis 41 Prozent,

c. die genannte fluoraliphatische, radikaleenthaltende Zusammensetzung in einer Menge im Bereich von 10 bis 40 Prozent und

d. die genannte Antioxidationsverbindung in einer Menge im Bereich von 0 bis 5 Prozent vorhanden ist.

3. Zusammensetzung nach Anspruch 1, dadurch gekennzeichnet, daß

a. das Anhydridcopolymer in einer Menge im Bereich von 10 bis 67 Prozent,

b. das flexibilisierend wirkende Polymer in einer Menge im Bereich von 10 bis 57 Prozent,

c. die fluoraliphatische, radikaleenthaltende Zusammensetzung in einer Menge im Bereich von 7 bis 68 Prozent,

d. die Mercaptanverbindung in einer Menge im Bereich von 0 bis 7 Prozent und

e. die Antioxidationsverbindung in einer Menge im Bereich von 1,0 bis 20 Prozent vorhanden ist.

4. Überzugslösung für elektrische Drähte und Verbinder, dadurch gekennzeichnet, daß die Gesamtlösung zu 4 bis 30 Gewichtsprozent aus der Zusammensetzung nach einem der vorhergehenden Ansprüche und zu 96 bis 70 Gewichtsprozent aus einem Lösungsmittelsystem besteht, das ein Gemisch von mindestens einem aliphatischen $C_6$- bis $C_9$-Kohlenwasserstoff, mindestens einem Alkohol mit einem bis vier Kohlenstoffatomen und Trichlortrifluorethan besteht.

5. Elektrischer Draht oder Verbinder mit einem Substrat, das mindestens auf einer Fläche mit einer Zusammensetzung nach einem der Ansprüche 1 bis 3 überzogen ist.

6. Artikel nach Anspruch 5, dadurch gekennzeichnet, daß der Verbinder ein elektrischer Aufnahmekörper ist, der mindestens einen Satz von metallischen Kontaktstücken aus einem mit Polyethylen oder Papier isolierten elektrischen Draht besitzt.